# EUROPEAN PATENT APPLICATION

(11) **EP 2 287 567 A1**
(43) Date of publication of application: **23.02.2011**
(21) Application number: 10008581.0
(22) Date of filing: 17.08.2010
(51) Int. Cl.: G01C 21/20, G01C 21/32, G01C 21/36

(54) **Personalized mapping system**

(30) Priority: 20.08.2009 US 235479 P; 05.03.2010 US 718769
(71) Applicant: Broadcom Corporation, Irvine, CA 92617 (US)
(72) Inventor: Karaoguz, Jeyhan, Irvine, CA 92617 (US)
(74) Representative: Jehle, Volker Armin

(57) **Abstract**

A system and method for providing a personal mapping system, receiving location information for a point of interest, receiving user-input information from a user, and associating the received user-input information with the point of interest.

## Description

### CROSS-REFERENCE TO RELATED APPLICATIONS/INCORPORATION BY REFERENCE

This patent application is related to and claims priority from provisional patent application serial number 61/235,479 filed Aug. 20, 2009, and titled "PERSONAL MAPPING SYSTEM," the contents of which are hereby incorporated herein by reference in their entirety.

### FEDERALLY SPONSORED RESEARCH OR DEVELOPMENT

[Not Applicable]

### SEQUENCE LISTING

[Not Applicable]

### MICROFICHE/COPYRIGHT REFERENCE

[Not Applicable]

### BACKGROUND OF THE INVENTION

As opposed to utilizing a general-purpose map, which includes much information that is irrelevant to a user and often does not include particular information of importance to a user, a user may create a personalized map populated with information of interest to the user.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

Various aspects of the present invention provide a system and method for providing a personal mapping system, substantially as shown in and/or described in connection with at least one of the figures, as set forth more completely in the claims. These and other advantages, aspects and novel features of the present invention, as well as details of illustrative aspects thereof, will be more fully understood from the following description and drawings.
According to an aspect, a method for generating a personalized map comprises:
receiving location information for a point of interest;
receiving user-input information from a user;
associating the received user-input information with the point of interest; and
generating a personalized map comprising a graphical indication at the location of the point of interest, where selection of the graphical indication by a user provides user access to the received user-input information associated with the point of interest.
Advantageously, the location information comprises geographical coordinate information.
Advantageously, receiving location information for a point of interest comprises automatically, without direct interaction with the user, tracking geographical coordinates of the user.
Advantageously, the location information comprises street address information.
Advantageously, the location information comprises a name of the point of interest. Advantageously, the user-input information comprises photograph information to be associated with the point of interest.

Advantageously, the user-input information comprises audio information to be associated with the point of interest.
Advantageously, the user-input information comprises communication network address information to be associated with the point of interest.
Advantageously, the user-input information comprises information of a category to be associated with the point of interest.
Advantageously, generating a personalized map comprises determining one or more categories of points of interest to be shown on the personalized map.
Advantageously, generating a personalized map comprises:
determining a plurality of users; and
populating the personalized map with respective location information and respective user-input information associated with each of the plurality of users.
Advantageously, generating a personalized map comprises:
determining a geographical location of the user; and
generating a personalized map comprising a graphical indication showing the geographical location of the user.
Advantageously, the method further comprises receiving non-user information from a non-user source, and associating the received non-user information with the point of interest.
Advantageously, receiving non-user information from a non-user source comprises receiving the non-user information from a networked server associated with the point of interest.
Advantageously, the non-user information comprises one or both of: time and/or date information.
Advantageously, the method further comprises associating an identity of the user with the received input information and the point of interest.
According to an aspect, a system for generating a personalized map comprises:
at least one module operable to, at least:
   receive location information for a point of interest;
   receive user-input information from a user;
   associate the received user-input information with the point of interest; and
   generate a personalized map comprising a graphical indication at the location of the point of interest, where selection of the graphical indication by a user provides user access to the received user-input information associated with the geographical location.
Advantageously, the location information comprises geographical coordinate information.
Advantageously, the at least one module is operable to receive location information for a point of interest by, at least in part, operating to automatically, without direct interaction with the user, track geographical coordinates of the user.
Advantageously, the location information comprises street address information.
Advantageously, the location information comprises a name of the point of interest.
Advantageously, the user-input information comprises photograph information to be associated with the point of interest.
Advantageously, the user-input information comprises audio information to be associated with the point of interest.
Advantageously, the user-input information comprises communication network address information to be associated with the point of interest.
Advantageously, the user-input information comprises information of a category to be associated with the point of interest.
Advantageously, the at least one module is operable to generate a personalized map by, at least in part, operating to determine one or more categories of points of interest to be shown on the personalized map.
Advantageously, the at least one module is operable to generate a personalized map by, at least in part, operating to:
determine a plurality of users; and
populate the personalized map with respective location information and respective user-input information associated with each of the plurality of users.
Advantageously, the at least one module is operable to generate a personalized map by, at least in part, operating to:
determine a geographical location of the user; and
generate a personalized map comprising a graphical indication showing the geographical location of the user.
Advantageously, the at least one module is operable to receive non-user information from a non-user source, and associate the received non-user information with the point of interest.
Advantageously, the at least one module is operable to receive non-user information from a non-user source by, at least in part, operating to receive the non-user information from a networked server associated with the point of interest.
Advantageously, the non-user information comprises one or both of: time and/or date information.
Advantageously, the at least one module is operable to associate an identity of the user with the received input information and the point of interest.

### BRIEF DESCRIPTION OF SEVERAL VIEWS OF THE DRAWINGS

Figure 1 is a diagram illustrating an exemplary personal mapping scenario.

Figure 2 is a diagram illustrating an exemplary personal map utilization scenario.

Figure 3 is a flow diagram illustrating of a method for forming a personalized map, in accordance with various aspects of the present invention.

Figure 4 is a flow diagram illustrating of a method for utilizing a personal map, in accordance with various aspects of the present invention.

Figure 5 is a diagram illustrating an exemplary personal mapping system environment.

Figure 6 is a diagram illustrating a non-limiting exemplary block diagram of a mobile device and/or information server, in accordance with various aspects of the present invention.

Figure 7 is a diagram illustrating a non-limiting exemplary block diagram of a mobile device and/or information server, in accordance with various aspects of the present invention.

### DETAILED DESCRIPTION OF VARIOUS ASPECTS OF THE INVENTION

The following discussion will refer to various communication modules, components or circuits. Such modules, components or circuits may generally comprise hardware, software or a combination thereof. Accordingly, the scope of various aspects of the present invention should not be limited by characteristics of particular hardware and/or software implementations of a module, component or circuit unless explicitly claimed as such. For example and without limitation, various aspects of the present invention may be implemented by one or more processors (*e.g.*, a microprocessor, digital signal processor, baseband processor, microcontroller, etc.) executing software instructions (*e.g.*, stored in volatile and/or non-volatile memory). Also for example, various aspects of the present invention may be implemented by an application-specific integrated circuit ("ASIC") and/or other hardware components.

The following discussion may also refer to communication networks and various aspects thereof. For the following discussion, a communication network is generally the communication infrastructure through which a communication device (*e.g.*, a portable communication device) may communicate with other systems. For example and without limitation, a communication network may comprise a cellular communication network, a wireless metropolitan area network (WMAN), a wireless local area network (WLAN), a wireless personal area network (WPAN), etc. A particular communication network may, for example, generally have a corresponding communication protocol according to which a communication device may communicate with the communication network. Unless so claimed, the scope of various aspects of the present invention should not be limited by characteristics of a particular type of communication network.

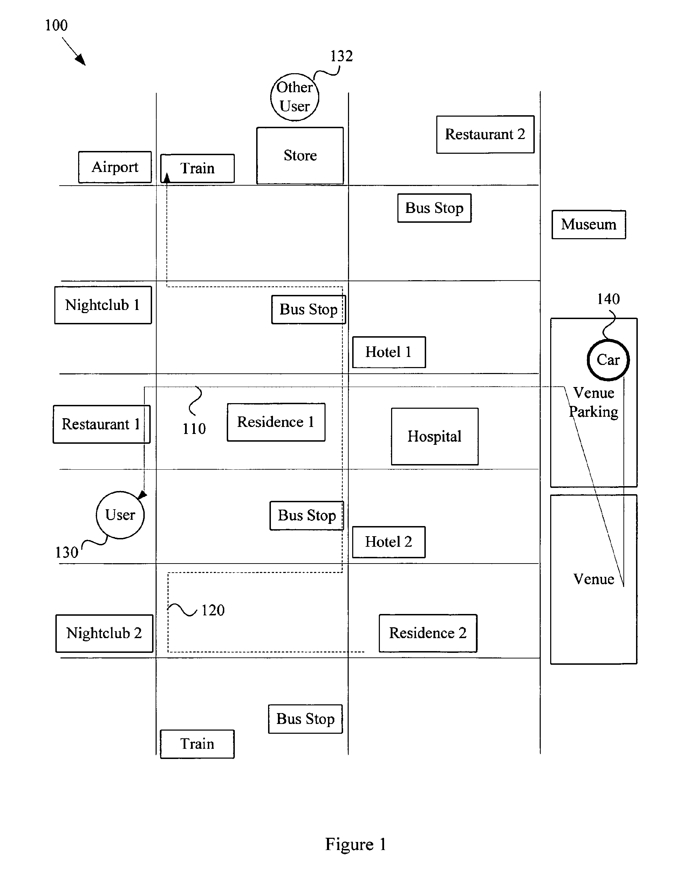

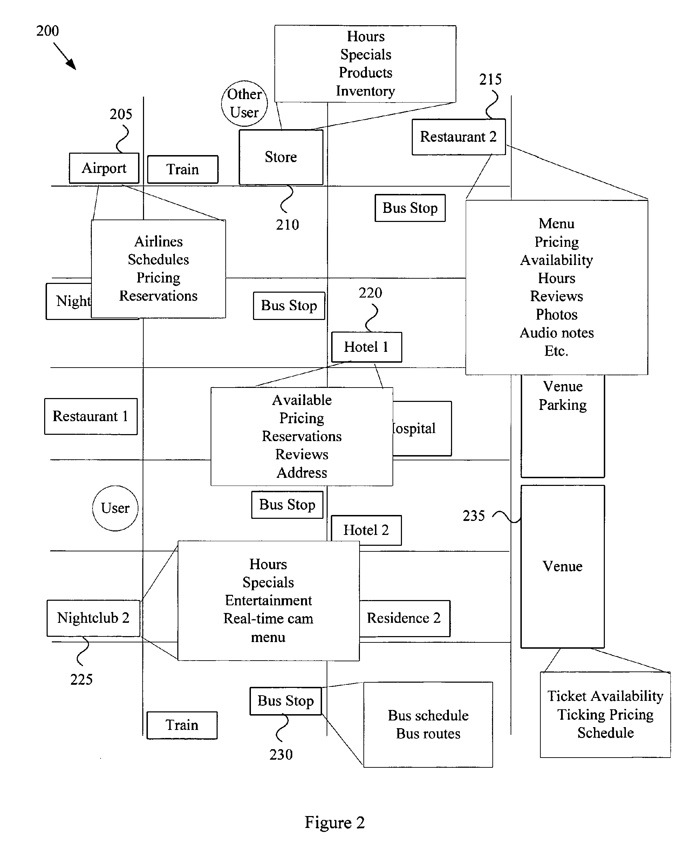

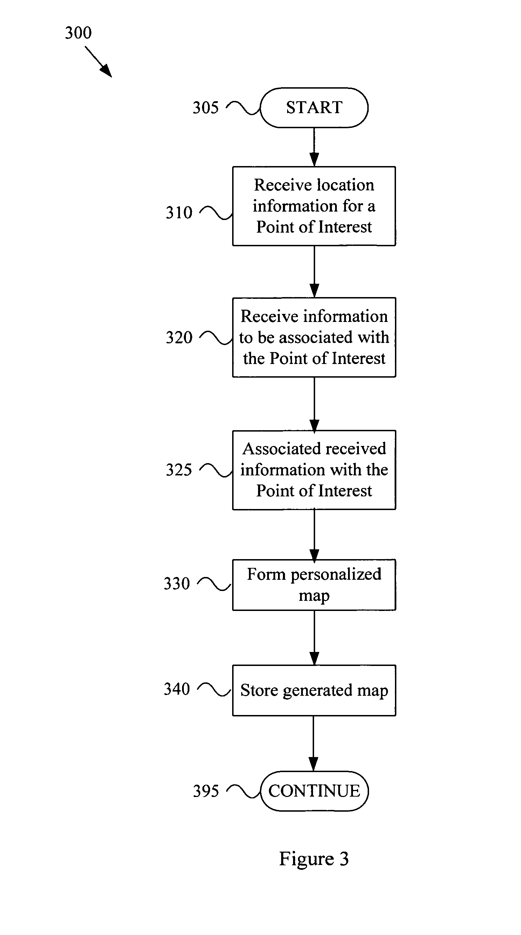

The following discussion will at times refer to a personalized map. Figures 1 and 2 illustrate various non-limiting aspects of such a personalized map and/or the utilization thereof. Such examples will be referred to in the following discussion of Figures 3-7.

Figure 1 shows an exemplary personalized map 100. The personalized map 100 may, for example, be a single-layer map comprising all of the mapping information. Alternatively, for example, the personalized map 100 may comprise multiple layers. For example, the personalized map 100 may comprise a general non-personalized map (*e.g.*, a street map, a street map with significant landmarks, a topographic map, etc.). The personalized map may then, for example, comprise one or more map layers overlaid on the general map layer (*e.g.*, a personal route layer, hotel layer, restaurant layer, entertainment venue layer, nightclub layer, retail store layer, campus layer, etc.). Such layers may then, for example, be flexibly selected and combined to form a personalized map.

The exemplary personalized map 100 may, for example, comprise points of interest individually selected and/or defined by the user. Such points of interest may, for example, be points of interest previously experienced by a user, recommended to a user, downloaded from an electronic guidebook, etc. Also for example, the exemplary personalized map 100 may comprise points of interest of a category (*e.g.*, transportation hubs and/or stations, nightclubs, restaurants, hotels, venues, museums, cultural establishments, tourist attractions, health clubs, health care facilities, etc.) selected by the user. Additionally, for example, the exemplary personalized map 100 may comprise default points of interest (*e.g.*, emergency facilities and/or equipment, etc.).

Points of interest may, for example, be represented by a variety of graphical indications. For example, such graphical indications may comprise features indicative of a category of a point of interest. A particular point of interest may, for example, comprise a particular shape and/or color associated with the category of the particular point of interest. Also for example, a point of interest may, for example, be indicated on the personalized map by a particular graphical feature indicative of whether the user has visited such point of interest, a particular graphical feature indicative of whether there is additional information available regarding the point of interest, a particular graphical feature indicative of whether a user's previous experience with the point of interest was favorable, indicative of a user and/or critic rating, etc. Characteristics of graphical indications associated with a point of interest may, for example, be defined by a user and/or predefined by the system.

The exemplary personalized map 100 may, for example, comprise route information. For example, the exemplary personalized map 100 includes a graphical indication of a user's route for a particular time duration (*e.g.*, a day or evening of travel, a vacation duration, a business trip duration, etc.). Such an exemplary route for a present user excursion is illustrated at line 110 on the exemplary personalized map 100. An exemplary route for a previous user excursion is illustrated at line 120 on the exemplary personalized map 100.

The exemplary personalized map 100 may also, for example, comprise information indicative of present user location. For example, the exemplary personalized map 100 comprises a graphical indication of the user's present location 130. In various exemplary scenarios, the exemplary personalized map 100 may also comprise graphical indications associated with locations of a plurality of people. For example, the exemplary personalized map 100 comprises a graphical indication 132 indicating the location of another person.

The exemplary personalized map 100 may further, for example, comprise graphical indications associated with movable objects of interest. As a non-limiting example, the exemplary personalized map 100 comprises a graphical indication 140 associated with the user's car.

Figure 2 is a diagram illustrating an exemplary personalized map 200 illustrating various additional aspects. As will be discussed in more detail later, various types of information may be associated with points of interest on the personalized map 200. A user may, for example, select a graphical indication associated with a point of interest on the personalized map 200 to access information associated with the point of interest.

As will be discussed in more detail later, various points of interest on the personalized map may be associated with a large variety of information (*e.g.*, user-provided information, enterprise-provided information, government-provided information, etc.). Various non-limiting examples of such information are illustrated in Figure 2.

For example, an airport 205 may be associated with airline information, schedule information, pricing information, reservation information, etc. Also for example, a retail store 210 may be associated with hour of operation information, product information, inventory information, special offer information, etc. Additionally for example, a restaurant 215 may be associated with menu information, pricing information, hour of operation information, reservation information, review/critic information, photographic information, audio information, etc. Further for example, a hotel 220 may be associated with availability information, pricing information, reservation information, review/critic information, address information, etc. As another example, a nightclub 225 may be associated with hour of operation information, special offer information, entertainment information, a real-time web camera, menu information, etc. Also for example, a bus stop or other public transportation means 230 may be associated with schedule, price and/or route information. Additionally for example, an entertainment venue 235 may be associated with ticket availability and/or pricing information, schedule information, ticket acquisition information, etc.

Figure 3 is a flow diagram illustrating of a method 300 for forming a personalized map, in accordance with various aspects of the present invention. The exemplary method 300 may, for example, be performed in a user system (*e.g.*, a personal computer, a portable communication device, etc.) or may be performed by a combination of one or more user systems, enterprise systems, government systems, etc. Many examples of such single and/or distributed systems are provided herein.

The exemplary method 300 may begin executing at step 305. The exemplary method 300 may begin executing in response to any of a variety of causes or conditions, non-limiting examples of which will now be presented. For example, the method 300 may begin executing in response to a direct user command to begin. For example, a user might enter a command or other input causing a program and/or portion thereof performing the method 300 to be executed.

Also for example, the method 300 may begin executing in response to entry and/or acquisition of information. For example, the method 300 may begin executing in response to detecting a user inputting and/or acquiring description information (*e.g.*, textual notes, audio notes, a photograph, etc.) that may be associated with a point of interest. Such user input may, for example, be a general user input or may be specifically indicated (*e.g.*, by the user) to be an input associated with execution of the method 300.

Additionally for example, the method 300 may begin executing in response to a communication signal received from a communication network. For example, the method 300 may begin executing in response to detecting a signal from a communication network (*e.g.*, LAN, wireless LAN, etc.) associated with a point of interest.

In general, the method 300 may begin executing in response to any of a variety of causes and/or conditions. Accordingly, the scope of various aspects of the present invention should not be limited by characteristics of any particular initiating cause and/or condition unless explicitly claimed.

The exemplary method 300 may, at step 310, comprise receiving location information for a point of interest. A point of interest may comprise any of a variety of characteristics. For example, a point of interest may comprise any of the characteristics discussed previously with regard to Figures 1 and 2. For example, a point of interest may be an entertainment venue, tourist attraction, landmark, transportation hub and/or station, restaurant, nightclub, playhouse, sporting complex, retail store, shopping center, café, coffee shop, beach, park, campus, office, health care facility, emergency services site, etc.

The received location information may comprise any of a variety of characteristics. For example and without limitation, the location information may comprise geographical coordinate information, street address information, information describing a location relative to landmarks, global coordinates, local coordinates, absolute coordinates, relative coordinates, etc. In another example, the received location information may comprise the name of the point of interest (*e.g.*, where the location of such named point of interest is generally known or readily determined).

Step 310 may comprise receiving the location information in any of a variety of manners. For example, step 310 may comprise receiving the location information directly from a user. For example, a user may utilize a user interface of an electronic device to enter coordinate information, address information, name information, etc. A user may, for example, input the location information textually, by identifying a point on a map, by selecting a location presented to the user on a list of locations, etc.

Also for example, step 310 may comprise receiving the location information from a positioning system. Such a positioning system may, for example, reside on-board a same system implementing the exemplary method 300 or may be external to such system. Such a positioning system may, for example, utilize or be based at least in part on global positioning system (GPS) technology, assisted GPS (A-GPS) technology, terrestrial triangulation systems (*e.g.*, based on cellular triangulation technology, premises triangulation technology, etc.), ultra-wideband technology, etc. In an exemplary scenario comprising a personal portable communication device with GPS capability, step 310 may comprise receiving information describing the location of the personal portable communication device.

Further for example, step 310 may comprise receiving the location information from electronic apparatus associated with the point of interest. For example, a wireless local area network associated with a point of interest may communicate the location of the point of interest. For example, a coffee shop that maintains a WiFi hotspot may communicate location information for the coffee shop to an electronic device communicatively coupled to the WiFi hotspot. Also for example, a point of interest may comprise a communication network or other electronic apparatus that periodically broadcasts beacons that include, among other things, location information for the point of interest.

Also for example, step 310 may comprise receiving and/or determining location information based on proximity to a known location. For example, a communication network signal or other signal associated with a particular location may be detected. For example, a user may enter a communication envelope of a WiFi hotspot that is associated with a particular street address, point of interest or geographical coordinates. Also for example, a user may enter a communication envelope associated with the user's premises or place of employment.

Step 310 may also, for example, comprise receiving motion information (*e.g.*, in addition to position information) as well. As discussed above with regard to location (or position) information, step 310 may comprise receiving such motion information from a sub-system that is part of the same system implementing the exemplary method 300 or may comprise receiving such motion information from an external system. For example, step 310 may comprise receiving velocity information. Such velocity information may, for example, be indicative of movement of a user (*e.g.*, indicative of movement of a portable communication device being carried by the user).

Step 310 may, additionally, for example, comprise receiving pointing direction information. Such pointing direction information may, for example, comprise compass direction information, clock direction information, information describing coordinates of a point that is being pointed to, etc. As discussed above with regard to location (or position) information, step 310 may comprise receiving such pointing information from an internal subsystem that is part of the same system implementing the exemplary method 300 or may comprise receiving such pointing information from an external system. As will be discussed later, such pointing information may be associated with various types of information (*e.g.*, a photograph associated with a point of interest may be associated with a particular location and/or pointing direction of a user and/or camera taking such photograph, or a textual description of a view or event may be associated with a particular location and/or viewing direction associated with the view or event).

Such pointing (or viewing) direction information may be determined in any of a variety of manners. For example, such direction information may be obtained via electronic compass, gyroscope, directional signals and/or antennas, etc.

Step 310 may, for example, comprise receiving route information also. For example, a user may identify information describing a route to be traversed, identify a route previously traversed (*e.g.*, as previously stored and indexed), select or download a route from a guide book, etc.

Step 310 may, for example, comprise tracking the location of a user. For example, step 310 may comprise receiving periodic updates of the user's location. Such tracking may, for example, be initiated by a user and then may run automatically without direct user interaction. For example, a user may direct a portable electronic device to track location throughout a journey. The portable electronic device may then continually (*e.g.*, periodically) update a monitored user location. Alternatively, for example, a user may direct an electronic device to log a particular location. For example, a user who desires to associate media information with a particular point of interest may input a command for the electronic device to make note of the user's location at that moment.

Step 310 may, for example, include receiving location (or position) information associated with other users. For example, respective location information may be received where such information is associated with a plurality of users of a defined group (*e.g.*, family, team, group of friends, work group, etc.).

In general, step 310 may comprise receiving location information for a point of interest (or route of interest or personal of interest, etc.). Accordingly, the scope of various aspects of the present invention should not be limited by characteristics of any particular manner of receiving location information or by characteristics of any particular type of location information unless explicitly claimed.

The exemplary method 300 may, at step 320, comprise receiving information. Such information may, for example, comprise information that is to be associated with the point of interest (or route or personal of interest).

Step 320 may, for example, comprise receiving the information from a user (*i.e.*, user-input information). For example, a user may interact with a portable communication device and/or a home-based personal computer to input such information. Step 320 may, for example, comprise receiving information from a co-located user or may, for example, comprise receiving information from a user (or user device) that is remote from the system implementing the method 300 but communicatively coupled to such system.

For example, a user may utilize a textual input user interface to enter textual information to be associated with a point of interest. Such information may, for example, include textual notes, phone number information, name information, message information, rating information, pricing information, time/date information, communication network address information, textual descriptions of points of interests and/or events to be associated therewith, meal descriptions and/or participants, information describing commercial transactions, social contacts, etc.

For example, a user may utilize a still image camera (*e.g.*, an independent camera, a camera component of a portable communication device, a web cam, etc.) to snap a photograph that the user wishes to associate with a point of interest. Step 320 may then comprise receiving information of such photograph (*e.g.*, a jpeg file, tiff file, gif file, bitmap, etc.). In such a scenario, step 320 may comprise receiving such a camera image from a camera system, where such a camera system may be independent of the system implementing the exemplary method 300 or may at least partially be integrated with such system. As discussed above, step 310 (or step 320) may also comprise receiving pointing direction information, information regarding location of an object being photographed, location of the camera or photographer, time/date information, etc.

In another exemplary scenario, a user might receive image information from another person (*e.g.*, in an email attachment, text message attachment, fax, MMS attachment, etc.). In such a scenario, step 320 may comprise receiving such an image. For example, such receipt may be caused directly by user action (*e.g.*, a user entering a command to import and/or save such image) to the mapping system.

In a further exemplary scenario, a user might create a faxed or scanned image (*e.g.*, of a menu, advertising brochure, list of specials, policies or procedures or rules, ticket stubs, photograph, etc.), where the user may desire such a scanned image to be associated with a point of interest. In such a scenario, step 320 may comprise receiving such a scanned image from a scanner system, where such a scanner system may be independent of the system implementing the exemplary method 300 or may at least partially be integrated with such system.

In an additional exemplary scenario, a user might utilize a video camera to memorialize a point of interest (or events occurring at such point of interest). Such a video camera may, for example, be independent of the system implementing the method 300 or may be a component of such system. For example, such a video camera may be integrated in a portable communication device implementing the exemplary method 300 (or portions thereof). For example, a user may utilize a video camera to create motion picture files (*e.g.*, mpeg files, mov files, etc.), which may then be received at step 320 (*e.g.*, for association with a point of interest).

In a further exemplary scenario, a user might utilize an audio recorder to memorialize a point of interest (or events occurring at such point of interest). Such an audio recorder may, for example, be independent of the system implementing the method 300 or may be a component of such system. For example, such an audio recorder may be integrated in a portable communication device implementing the exemplary method 300 (or portions thereof). For example, a user may utilize an audio recorder to create audio files (*e.g.*, mp3 files, wav files, etc.), which may then be received at step 320 (*e.g.*, for association with a point of interest). Such audio files may comprise general musings of the user, a recorded conversation, music, traffic noise, sounds of nature, sales pitches, etc.

In yet another exemplary scenario, step 320 may comprise receiving information categorizing a particular point of interest. Such information may, for example, include information indicating that the point of interest is a restaurant, scenic viewpoint, park, airport, museum, entertainment venue (*e.g.*, sports, music, theater, etc.), a service (*e.g.*, a hospital or other care facility, police department, chamber of commerce, consulate, etc.), shopping center, mass transit hub and/or station, parking lot and/or other location at which a vehicle is parked, residence, office, etc.

In another exemplary scenario, step 320 may comprise receiving commercial transaction information. For example, step 320 may comprise receiving information describing parties involved in such a transaction, price information, payment information, type of good and/or service provided, type of payment, time and/or date information, receipt information, etc. Note that such information may, be textual, audio, still image, moving image, etc.

In still another exemplary scenario, step 320 may comprise receiving schedule and/or reservation information. For example, step 320 may comprise receiving schedule information associated with an entertainment venue or may comprise receiving information describing and/or confirming a reservation at a restaurant. Such schedule information may also be personal schedule information. For example, step 320 may comprise receiving appointment information for an appointment at a hospital or other care facility, business appointment, etc. Also, for example, step 320 may comprise receiving mass transit scheduling information (*e.g.*, bus schedule and/or route information, flight schedule information, train schedule and/or route information, etc.).

Note that step 320 may also comprise providing an editing interface to a user by which a user may edit or otherwise modify information that has been previously received (or associated or mapped). In other words, step 320 need not be limited to only newly originated information, but may, for example, include modified previously-received information as well. For example, a step 320 may comprise providing a user interface allowing a user to modify notes previously entered and associated with a point of interest. Such modifying may, for example, include deleting, adjusting and/or adding notes. Similarly, such editing may be applied to any of the above-mentioned types of information that may be received at step 320.

Step 320 may also, for example, comprise receiving the information (*e.g.*, any or all information herein, etc.) from a non-user source. Step 320 may, for example, comprise receiving such information from a non-user source automatically (*i.e.*, without direct user interaction) or with user involvement (*e.g.*, receiving permission from a user to receive such information and/or receiving a command from a user to receive such information).

Such a non-user source may comprise any of a variety of characteristics. For example and without limitation, a non-user source may comprise a sub-system of the system implementing the exemplary method 300 (*e.g.*, a sub-system of a personal portable electronic device and/or personal computer system, etc.) or may comprise a system independent of the system implementing the exemplary method 300. Additionally for example, the non-user source may comprise a system associated with a particular point of interest (*e.g.*, a communication system like a wireless LAN and/or web server associated with a point of interest), where such a system may distribute information that a user may wish to associate with the point of interest. Further for example, the non-user source may comprise a government system, library system or other public system from which a user may obtain information to associate with a point of interest.

As discussed previously, step 320 may comprise receiving still image (*e.g.*, photographic image) information, moving picture information, audio information, textual information, etc. Any or all of such types of information may also be received from a non-user source. Non-limiting examples of such receiving will now be provided. Note that a non-user source may be geographically remote from the system implementing the method 300 or may be co-located.

For example, step 320 may comprise receiving menu, special offer, photographic, critical review, travel directions and/or reservation information from a restaurant server communicatively coupled to a wireless LAN and/or the Internet. Also for example, step 320 may comprise receiving photographic images, rules and regulations, hours of operation and/or entrance fee information from a network and/or server associated with a national park.

Further for example, step 320 may comprise receiving time and/or date information from a global server of such information through a communication network. Alternatively and/or in addition, step 320 may comprise receiving time and/or date information from a local sub-system of a system implementing the method 300 (*e.g.*, a local integrated time and/or date subsystem).

In general, step 320 may comprise receiving information (*e.g.*, information that is to be associated with the point of interest, route of interest, person of interest, etc.). Accordingly, the scope of various aspects of the present invention should not be limited by characteristics of any particular type of information and/or source thereof unless explicitly claimed.

The exemplary method 300 may, at step 325, comprise associating the received information (*e.g.*, as received at step 320) with the point of interest (or route of personal of interest). Such associating may also, for example, comprise associating geographical location information. Such associating may comprise any of a variety of characteristics, non-limiting examples of which will be presented below.

For example and without limitation, step 325 may comprise creating a logical association with location information received at step 310 and information received at step 320. Such associating may also, for example, comprise associating the received location information (*e.g.*, as received at step 310), the received information (*e.g.*, as received at step 320) and the point of interest.

Step 325 may comprise performing such associating in any of a variety of manners, non-limiting examples of which will be provided below. For example, step 325 may comprise maintaining a database or data structure with links to information of interest. For example, step 325 may comprise maintaining a data structure comprising a list of points of interest in a first dimension with other information associated with the listed points of interest in a second, third and/or nth dimension. Such information, so logically associated, may then be filtered and combined in a manner specified by the system and/or the user at a later point (*e.g.*, during map generation). In another example, a linked list of information linking points of interest with associated information may be utilized. In a further example, a database (*e.g.*, a relational database) may be utilized to maintain and/or perform such associating. For example, information associated with a point of interest may be stored in a private and/or public database. Such information may, for example, be stored in a secure storage, where access to such information is controlled, or may be stored in a publicly accessible storage.

In an exemplary scenario, a data structure may be architected in layers (or dimensions) in accordance with categories of points of interest. Such a data structure may, for example, be viewed analogously to mapping layers. In another exemplary scenario, a data structure may be architected in layers in accordance with user. For example, in a multi-user system, each user may comprise a separate respective layer (or dimension) in the data structure. For example, a plurality of users may each be associated with their own respective point of interest information. In yet another exemplary scenario, a data structure may be architected in accordance with a time window (*e.g.*, a vacation duration, a business travel duration, a fiscal year, a month, etc.).

As discussed above, steps 310 and 320 may comprise receiving any of a variety of types of information to be associated with one or more particular points of interest (or route or personal of interest). Step 325 may, for example, comprise associating such information in preparation for map forming operations.

Step 325 may, for example, comprise linking associated information in any of a variety of manners (*e.g.*, depending on how information may be stored). For example, in an exemplary scenario, information to be associated with a particular point of interest may be stored in one or more files, where such files are indexed by the point of interest, geographical location of the point of interest, category of the point of interest, time, date, user, etc.

As discussed above, information regarding a point of interest may be stored in one or more locations. In an environment where such information is stored in a plurality of locations, step 325 may comprise synchronizing such information between a plurality of systems and/or devices. For example, a user may utilize one or more personal portable electronic devices (*e.g.*, a camera, cellular phone, PDA, handheld computer, etc.) to enter, download or otherwise develop information (*e.g.*, location information, photograph information, textual information, etc.) to be associated with a point of interest. Such information may be maintained in one or more of such personal portable electronic devices, but may also be stored in other locations (*e.g.*, at a home desktop computing system, a personal computer, set top box, media center, gaming system, home network server, centralized network database, etc.). In such a scenario, step 325 may comprise synchronizing information, placing copies of such information where desired.

For example, in an exemplary scenario where a user has used one or more personal portable electronic device to gather information to be associated with a point of interest, step 325 may comprise communicating such information between systems in response to a user command to perform synchronization automatically (*i.e.*, without direct user interaction).

For example, a user may return home from a vacation in which information regarding many points of interest was obtained. Upon detecting that the portable electronic device(s) are within range of a wireless home network, the portable electronic device(s) and the wireless home network may establish a communication link and synchronize information between devices. For example, a home computing system may be the primary keeper of personalized map information. In such an example, acquired point of interest information may be automatically communicated from portable electronic devices to the home computing system.

Alternatively for example, the user may physically connect one or more portable electronic devices to the home computing system and such automatic synchronization may begin upon detection of such connection. Additionally for example, the user may play a roll in such synchronization by, for example, executing a program that operates to manage such synchronization.

In another example, step 325 may comprise synchronizing information at a remote system (*e.g.*, a home computing system, a networked central database, etc.) while information regarding a point of interest is obtained. For example, when a user snaps a photograph to be associated with a point of interest, the user may designate the photograph for such association and trigger the instant synchronization of photograph information between the user's camera device and a central server (*e.g.*, via a wireless communication network and the Internet). Note that such instant synchronization may advantageously allow other users (*e.g.*, other users granted access to the user's personalized mapping information) to access information regarding points of interest in a real-time or near-real-time manner. Note that the above-mentioned synchronization activities may be performed via one or more of a variety of communication networks (*e.g.*, via a direct wired link, wireless LAN, cellular communication network, cable television network, satellite network, automobile communication network, the Internet, wireless PAN, metropolitan area network, home network, etc.).

In general, step 325 may comprise associating the received information (*e.g.*, as received at step 320) with the point of interest and/or corresponding location information. Accordingly, the scope of various aspects of the present invention should not be limited by particular characteristics of any particular manner of performing such associating unless explicitly claimed.

The exemplary method 300 may, at step 330, comprise forming a personalized map, locations on which are associated with the previously discussed information. Such forming may be performed in any of a variety of manners, non-limiting examples of which will now be presented.

For example, step 330 may comprise identifying and/or defining a graphical indication (*e.g.*, an icon) to be associated with a point of interest. For example, points of interest associated with a particular category may correspond to a particular type of graphical indication (*e.g.*, a default graphical indication or one customized by the user). Such a graphical indication may, for example, be identified by a file name, memory location, data structure, etc. Step 330 may then, for example, associate such a graphical indication with the point of interest (*e.g.*, in any of the manners discussed previously at step 325) and/or geographical location thereof.

Step 330 may also, for example, comprise establishing and/or maintaining user interface features associated with a point of interest. For example, as will be discussed later, during utilization of a personalized map, a user may select a graphical indication associated with a point of interest and be presented with information associated with the point of interest, which may include a user interface mechanism by which the user may access information associated with the point of interest. Step 330 may, for example, include defining and/or maintaining such user interface mechanism.

For example, in an exemplary scenario where step 320 comprises receiving image information to be associated with a point of interest, step 330 may comprise defining a user interface mechanism by which a user may access such image information via selection of a graphical indication associated with the point of interest. Such user interface definition may then be linked to the particular point of interest (*e.g.*, for presentation to the user upon selection of the graphical indication associated with the point of interest). For example, such a user interface mechanism may comprise a pull-down menu of available images, a display of thumbnail images, etc.

In another exemplary scenario, where step 320 comprises receiving commercial transaction information to be associated with a point of interest, step 330 may comprise defining a user interface mechanism presenting the user with an option to view such commercial transaction information. Such user interface definition may then be linked to the particular point of interest (*e.g.*, for presentation to the user upon selection of the graphical indication associated with the point of interest).

In yet another exemplary scenario, where step 320 comprises receiving textual note information to be associated with a point of interest, step 330 may comprise defining a user interface mechanism by which a user can view and/or edit such textual note information. Such user interface definition may then be linked to the particular point of interest (*e.g.*, for presentation to the user upon selection of the graphical indication associated with the point of interest).

In addition to information regarding points of interest, step 330 may comprise creating graphical indications showing user routes. For example, in an exemplary scenario where step 310 comprises tracking user location, step 330 may comprise defining a graphical feature and associating such a graphical feature with such user route. Such a route may then be later recalled for presentation on a personalized map.

As discussed previously, various information to be associated with a point of interest may be stored in any of a variety of locations. In an exemplary scenario where information is stored in a remote networked location, step 330 may comprise defining a user interface mechanism by which a user may access such information. For example, step 330 may comprise defining and associating a hyperlink, URL or other networked server accessing mechanism with a point of interest. For example, step 330 may comprise defining a user interface mechanism by which a user may initiate access to networked information for a point of interest upon selection of a graphical indication associated with the point of interest. Such a user interface mechanism may, for example upon selection of a graphical indication associated with a point of interest, present the user with a list of information that is available via communication network, where selection of a member of such list by a user will initiate transfer of the selected information from a remote networked location to the user's device and subsequent presentation of such information to the user. Note that such networked location may be a location at which the user has stored information or may also be a networked location of a server associated with the point of interest (*e.g.*, a web address or URL of a server associated with the point of interest).

In an exemplary scenario where information is stored in a local memory, step 330 may comprise defining a user interface mechanism by which a user may access such information. For example, step 330 may comprise defining and associating a hyperlink, file address, memory address or other local information accessing mechanism with a point of interest. For example, step 330 may comprise defining a user interface mechanism by which a user may initiate access to locally stored information for a point of interest upon selection of a graphical indication associated with the point of interest. Such a user interface mechanism may, for example upon selection of a graphical indication associated with a point of interest, present the user with a list of information that is available in local storage, where selection of a member of such list by a user will initiate transfer of the selected information from the local storage to a user output for presentation to the user.

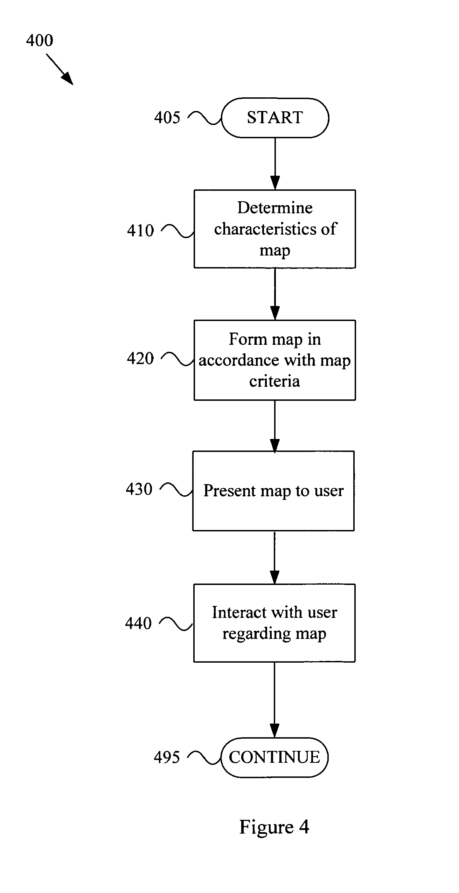

In general, step 330 comprises forming aspects of a personalized map. The later discussion of Figure 4 will also present various additional exemplary aspects of map formation, presentation and/or utilization.

The exemplary method 300 may, at step 340, comprise storing personalized map information. Such storage may be performed in any of a variety of manners, non-limiting aspects of which will now be presented.

As discussed previously, the personalized map information (*e.g.*, including location information, point of interest name, information associated with a point of interest, information associated with a location of a point of interest, route information, etc.) may be stored at any of a variety of locations. For example, step 340 may comprise storing the personalized map information locally in a personal electronic device (*e.g.*, a portable electronic device carried by the user, a personal computer, a home network server, a set top box, a gaming system, a home entertainment system, etc.).

Also for example, step 340 may comprise storing the personalized map information in a central database shared by a plurality of users (*e.g.*, users associated with a communication service provider, subscription provider, Internet company providing specifically for the archiving of such information, file-sharing site, etc.). As discussed previously (and as will be discussed in more detail later), a personalized map may be generated that includes information from other users. Such centralized storage may be advantageous in such an exemplary scenario.

Step 340 may, for example, comprise storing personalized map information in a secure manner (*e.g.*, utilizing encryption and/or secure access mechanisms). For example, step 340 may comprise storing at least a portion of a user's personalized map information in a manner such that at least a portion of the stored information is only accessible to the user.

Also for example, step 340 may comprise storing personalized map information in a manner in which such information (or a portion thereof) is accessible (*e.g.*, readable and/or writable) by one or more other users designated by the user as having permission to access such stored information. For example, in such an exemplary scenario, a defined group of users may collaborate during the creation of a personalized map (*e.g.*, during a night on the town, during a vacation, etc.). In such a scenario, any member of a defined group may view and/or generate information to be associated with a point of interest.

Further for example, step 340 may comprise storing personalized map information in a manner in which such stored information is publicly accessible. For example, in such an exemplary scenario, an undefined group of users and/or the public in general may view, enter and/or amend information associated with a point of interest.

Note that access to personalized map information may also be defined based on time and/or date (*e.g.*, a vacation duration, an evening, business trip duration, weekend, etc.).

In general, step 340 comprises storing personalized map information. Accordingly, the scope of various aspects of the present invention should not be limited by the characteristics of any particular manner of performing such storing unless explicitly claimed.

The exemplary method 300 may, at step 395, comprise performing continued processing. Such continued processing may, for example, comprise repeating the exemplary method 300 for a plurality of points of interest, a plurality of information entries for a point of interest, a plurality of different users, a plurality of time durations, etc. For example and without limitation, such continued processing may include performing any or all aspects of the exemplary method 400 illustrated in Figure 4 and to be discussed next.

Turning next to Figure 4, such figure is a flow diagram illustrating of a method 400 for utilizing a personalized map, in accordance with various aspects of the present invention. The exemplary method 400 may, for example, share any or all characteristics with the exemplary method 300 illustrated in Figure 3 and discussed previously. For example, as with the exemplary method 300 illustrated in Figure 3, the exemplary method 400 may, for example, be performed in a user system (*e.g.*, a personal computer, a portable communication device, etc.) or may be performed by a combination of one or more user systems, enterprise systems, government systems, etc. Many examples of such single and/or distributed systems are provided herein.

The exemplary method 400 may begin executing at step 405. The exemplary method 400 may begin executing in response to any of a variety of causes or conditions, non-limiting examples of which will now be presented. For example, the method 400 may begin executing in response to a direct user command to begin. For example, a user might enter a command or other input causing a program and/or portion thereof performing the method 400 to be executed.

Also for example, the method 400 may begin executing in response to a user moving to a particular geographical area. In a non-limiting example, detection of a user entering a particular geographical area (*e.g.*, arriving in a city) may trigger the formation and storage of a personalized map corresponding to such geographical area (*e.g.*, in anticipation of a user's need for such personalized map information).

Additionally for example, the method 400 may begin executing in response to a communication signal received from a communication network. For example, the method 400 may begin executing in response to detecting a signal from a communication network (*e.g.*, LAN, wireless LAN, etc.) associated with a geographical area and/or a point of interest.

In general, the method 400 may begin executing in response to any of a variety of causes and/or conditions. Accordingly, the scope of various aspects of the present invention should not be limited by characteristics of any particular initiating cause and/or condition unless explicitly claimed.

The exemplary method 400 may, at step 410, comprise determining characteristics of a personalized map to be generated. Step 410 may comprise making such determination in any of a variety of manners. For example and without limitation, step 410 may comprise determining characteristics of a personalized map to be generated based, at least in part, on default characteristics. For example, step 410 may comprise determining characteristics comprising default characteristics which have not been specified by a user.

For example, default characteristics may specify a default geographical region to map (*e.g.*, a region associated with a user's present geographical location, a region associated with a user's home location, etc.). In such a scenario, step 410 may comprise determining to map the default geographical region absent input from a user specifying a geographical region different from the default region.

Other default characteristics may, for example, comprise a default map resolution, default categories of points of interest (*e.g.*, points of interest associated with emergency services, transportation stations, etc.), default graphical indication characteristics such as shape and/or color, etc. In various exemplary scenarios, step 410 may comprise determining to generate a map comprising the default characteristics absent input from a user selecting and/or redefining particular characteristics.

Default characteristics may, for example, be stored in a system and/or device implementing at least a portion of the exemplary method 400. For example, such a system may be configured by the manufacturer, software developer, etc. to include information of default characteristics (*e.g.*, stored in a memory device, data structure, etc.).

Also for example, step 410 may comprise determining characteristics of a personalized map to be generated based, at least in part, on characteristics previously defined by the user. For example, step 410 may comprise determining characteristics of a personalized map to be generated based on characteristics of a previous generated personalized map. For example, step 410 may comprise determining that the characteristics of a personalized map are identical to the immediately prior generated personalized map.

In another example, step 410 may comprise determining characteristics of a personalized map based on a map profile previously defined by a user and stored in a manner that can be retrieved later. For example, a user may specify and store a personalized map profile including characteristics associated with a vacation map. Such a profile may, for example, include characteristics associated with geographical area, tourist attractions, family entertainment and restaurants, hotel accommodations, child attractions, etc., and such a profile may be stored in an indexed manner (*e.g.*, by name) enabling such a profile to be specified by a user that desires a personalized map to be generated comprising such family vacation map characteristics. In another example, a user may specify and store a personalized map profile including characteristics associated with a business travel map. Such a profile may, for example, include characteristics associated with office locations, rental car locations, public transportation options, business-type restaurant locations, hotel locations, etc., and such a profile may be stored in an indexed manner (*e.g.*, by name) enabling such a profile to be specified by a user that desires a personalized map to be generated comprising such business travel map characteristics. Thus, a user may compile a library of personalized map profiles. Other examples may, for example, include: a restaurant map, shopping map, public transportation map, hotel map, map showing previous routes taken, nightclub map, etc.

In an exemplary scenario where step 410 comprises determining characteristics of a personalized map based on a previously defined map profile, step 410 may comprise providing a user interface by which a user may conveniently specify a previously-defined personalized map profile. For example, step 410 may comprise providing a menu (*e.g.*, a pull-down menu) from which a user may select a previously defined map profile.

Also, in such scenario, step 410 may also provide the user the ability to modify a previously defined personalized map profile (*e.g.*, adding/deleting map characteristics, redefining map characteristics, renaming a modified map profile for storage and later recall, etc.).

As discussed above, a user may specify characteristics of a desired personalized map. Various non-limiting exemplary characteristics may include: map size, map scope, map resolution, particular points of interests or types thereof to display, particular user locations to display, particular routes to display, graphical indication and/or color characteristics, timeframe for the inclusion of personal attachments, etc. The following discussion will include non-limiting examples of the user specification of various personalized map characteristics.

For example, a user might specify that the user would like to view all dinner restaurants and nightclubs visited in a particular city or other region. One or more of such restaurants and nightclubs may then, for example, be attached to personal information input by the user and/or other users.

Also for example, a user might specify a timeframe (*e.g.*, requesting a personalized map corresponding to a vacation taken to a particular city in a particular range of dates). Such personalized map may then, for example, comprise information of routes taken during such vacation and/or points of interest along such routes. Further for example, a user might request a map-based recreation of a particular vacation. Such a generated map may then, for example, include routes traveled and various points of interest visited, where personal (*e.g.*, user input) information may then be attached to various points of interest along such routes.

In another example, a user might specify that a personalized map be generated that is populated with destinations that a particular group of people (*e.g.*, a group of friends, a set of coworkers, a family, one or more tour guides, etc.) have visited and annotated with personal information. For example, a group of users (*e.g.*, a group of coworkers) may agree to share information regarding points of interest visited in a particular city, where group members have input information attached to such points of interest. In such a scenario, a user may refer to such a personalized map formed to include information of such points of interest to determine restaurants to visit, nightclubs to avoid, recommended public transportation options, non-recommended hotels, low-expense meal options, etc.

In a further example, a user might specify that the user would like to view the real-time location of, and/or routes taken by, other users. Such real-time location(s) may, for example, be obtained utilizing various positioning system mechanisms. For example, a user might request a vacation map, including the real-time locations of all family members along with routes taken, points of interest to visit, points of interest visited, annotated personal information associated with such points of interest, etc. In such an exemplary scenario, a master map may be created to include locations, routes, points of interest, user-input information, etc. associated with all family members. Such a master map may be synchronized on personal electronic devices of respective family members, and/or such a master map may be stored and/or maintained in a central networked location accessible by each family member (*e.g.*, on a central server, networked home computer, etc.).

In another example, a group of a plurality of users out on the town could agree to communicate position information and/or point of interest information for the evening. For example, the location and/or route of each of the plurality of users could be displayed on the generated map, along with point of interest information. Such a generated map may then, for example, be continually updated throughout the evening to include user location information, user route information, information regarding points of interested input by respective users (*e.g.*, identified by user), etc. As discussed above, each group member may then access a master map associated with the entire group and/or a personalized map associated with just the individual group member. That is, individual personalized maps may be maintained in addition to group maps in such a scenario.

In a further example, a user may specify that a personalized map show the location of various objects of interest. For example, a user may specify that a personalized map show the location of one or more known vehicles. Such location may, for example, be shown at all times or just on command (*e.g.*, with password protection). Such location may, for example, have been previously entered by a user or obtained from a positioning system (*e.g.*, at step 320).

In general, step 410 may comprise determining characteristics of a personalized map to be generated. Thus, the scope of various aspects of the present invention should not be limited by characteristics of any particular manner of performing such determining unless explicitly claimed.

The exemplary method 400 may, at step 420, comprise forming a personalized map in accordance with the characteristics determined at step 410. Step 420 may, for example, share any or all characteristics with step 330 and other steps of the exemplary method 300 illustrated in Figure 3 and discussed previously.

Step 420 may comprise generating the personalized map in any of a variety of manners. For example and without limitation, step 420 may comprise forming the personalized map in steps (or layers). For example, step 420 may comprise cropping a street map in accordance with a user-specified map area.

Then, for example, step 420 may comprise overlaying graphical indications on the street map, where the graphical indications are associated with respective categories of points of interest specified by the user at step 410 and/or default categories. Figure 1 and the discussion thereof presented a variety of non-limiting examples of such graphical indications associated with respective points of interest.

Then for example, step 420 may comprise overlaying graphical indications on the map, where the graphical indications are associated with respective users and/or user routes. Figure 1 and the discussion thereof presented a variety of non-limiting examples of such graphical indications associated with respective users and/or user routes.

As mentioned previously in the discussion of Figure 3, points of interest may be associated with any of a variety of input information (*e.g.*, information input directly by a user, information transferred under direction of a user, information transferred and/or accessible under the control of the user, etc.). Step 420 may thus comprise associating graphical indications on the personalized map with such information and/or sources of such information. Such association may, for example, be utilized at step 440 during user interaction.

Step 420 may comprise performing such personalized map formation and storing formed map information in a variety of manners. For example and without limitation, step 420 may comprise forming a complete personalized map (*e.g.*, at a home computer, networked server, etc.) and downloading such map into one or more personal portable electronic devices. Similarly, the entire personalized map may be formed, stored and/or maintained at a personal electronic device.

In another example, step 420 may comprise forming a skeleton or shell of a personalized map and storing such shell in a user's personal portable electronic device. Step 420 may then comprise establishing a communication link between the personal electronic device and one or more networked devices providing access to various information associated with the map. For example, such communication links may be utilized later at step 440 for interacting with the user and providing a link to information desired by a user regarding a point of interest.

In yet another example, step 420 may comprise forming a personalized map in real-time as requested by a user. Such a personalized map may, for example, be formed by a personal portable electronic device when such a map is requested by a user utilizing such device. Alternatively, such a personalized map may, for example, be formed by a networked device (*e.g.*, a home computer, networked server, etc.) communicatively coupled to a personal portable electronic device when such a map is requested by a user utilizing such portable device, and then communicated to the portable device via a communication link between the networked device and the portable device.

In general, step 420 may comprise forming a personalized map (*e.g.*, in accordance with the characteristics determined at step 410 and/or in accordance with information obtained in accordance with the exemplary method 300). Accordingly, the scope of various aspects of the present invention should not be limited by characteristics of any particular manner of forming a personalized map unless explicitly claimed.

The exemplary method 400 may, at step 430, comprise presenting the personalized map to the user (*e.g.*, the personalized map formed at step 420). Step 430 may comprise presenting the personalized map to the user in any of a variety of manners, non-limiting examples of which will be presented below.

For example, step 430 may comprise presenting the personalized map to the user on a display of a personal portable electronic device (*e.g.*, a portable telephone, personal digital assistant, handheld computer, media presenting device, positioning system, gaming system, etc.). Such display may, for example, comprise a touch screen display, which may be utilized for user input. Similarly, step 430 may comprise presenting the personalized map to the user on a display of a laptop or notebook computer, electronic book device, etc.

Also for example, step 430 may comprise presenting the personalized map to the user on a display of a personal home computer (*e.g.*, a desktop computing system). In such a scenario, a user may develop a personalized map utilizing the personal home computer (*e.g.*, taking advantage of large screen size, relatively infinite energy resources and processing speed of the personal home computer) and then transfer the developed personalized map or at least a portion thereof to a personal portable electronic device that the user may conveniently carry.

Further for example, step 430 may comprise presenting the personalized map on a television screen (*e.g.*, utilizing a set top box and/or computer coupled to such television screen). For example, step 430 may comprise utilizing a set top box that has been adapted to present personalized map information on a television screen and/or interface with a user regarding such a personalized map.

In general, step 430 may comprise presenting the personalized map to the user (*e.g.*, the personalized map formed at step 420). Accordingly, the scope of various aspects of the present invention should not be limited by characteristics of any particular manner of presenting a personalized map unless explicitly claimed.

The exemplary method 400 may, at step 440, comprise interacting with a user regarding the presented personalized map (*e.g.*, responding to user interaction with the presented personalized map). Such interaction may comprise any of a variety of characteristics, non-limiting examples of which are provided herein.

For example, step 440 may comprise providing a user interface and utilizing such user interface to interact with a user to define and/or redefine personalized map characteristics (*e.g.*, redefining personalized map characteristics determined at step 410). For example, step 440 may comprise changing categories of points of interest presented to the user on the personalized map. In an exemplary scenario, a user may initially specify that dinner restaurants be presented on the personalized map, and then after dinner the user may specify that hotels and nightclubs be presented to the user and remove dinner restaurants from the personalized map. In such a manner, a user is provided the flexibility to populate the personalized map with information immediately of interest to the user and remove unwanted clutter from the map.

Also for example, step 440 may comprise providing a user interface by which a user may select a point of interest (or route or person of interest, etc.). For example, step 440 may comprise interacting with a user utilizing a touch screen that enables a user to touch a graphical indication associated with a point of interest, or may comprise utilizing a mouse or other cursor control device to perform such user interaction.

Upon selection of a point of interest by a user, step 440 may comprise presenting the user with any of a variety of types of information that have been associated with the point of interest. Many non-limiting examples of such information were provided previously (*e,g.*, in the discussion of Figure 2). For example, step 440 may present the user with a list of available information (*e.g.*, a menu structure) that has been associated with the point of interest (*e.g.*, photographs, voice notes, menu, reviews, schedule, availability, text memos, live camera feed, real-time weather and/or forecast, etc.). Various non-limiting examples of such menu structures are illustrated in Figure 2. The user may then select the information that the user desires to access, which will then be presented to the user.

For example, a user may select a graphical indication associated with a particular nightclub. In response, at least in part, to such selection, step 440 may comprise notifying the user that textual notes, a reservation mechanism and photographs associated with the particular nightclub are available. Step 440 may also comprise notifying the user that a current menu and list of happy hour specials is available via communication network. Step 440 may then, for example, comprise retrieving and/or providing such information to the user upon selection of particular information by the user. For example, continuing the exemplary scenario, step 440 may comprise communicating with a web server via the Internet to download a current menu and list of specials upon request by the user and/or upon generation of the personalized map. Also for example, step 440 may comprise presenting a slide show presentation of photographs associated with the nightclub. Further for example, step 440 may comprise presenting textual notes to the user upon request by the user, where such textual notes might have been entered by the user (or other users) during a previous visit to such nightclub.

Also for example, step 440 may comprise providing a user interface mechanism by which a user may add additional information to be associated with a selected point of interest and/or edit or delete information already associated with a selected point of interest. For example, continuing the exemplary scenario from above, step 440 may comprise providing the user with a user interface by which a user may associate a new photograph with the selected nightclub. Also for example, step 440 may comprise providing the user with a user interface by which the user may edit notes previously associated with the nightclub. For example, a user may change a rating score, a user may add new information concerning a new menu item consumed, a user may add a note about new acquaintances and/or former acquaintances encountered again, etc.

Additionally for example, step 440 may comprise providing a user interface by which a user may select a route of interest (*e.g.*, a present route associated with a present time period and/or a previously traversed route corresponding to a different time period). For example, step 440 may comprise interacting with a user utilizing a touch screen that enables a user to touch a graphical indication associated with a route of interest, or may comprise utilizing a mouse or other cursor control device to perform such user interaction.

Upon selection of a route of interest by a user, step 440 may comprise presenting the user with any of a variety of types of information that have been associated with the route of interest. Many non-limiting examples of such information were provided previously. For example, step 440 may present the user with a list of available information (*e.g.*, a menu structure) that has been associated with the route of interest (*e.g.*, photographs, voice notes, menu, review, schedule, availability, text memos, live camera feed, real-time weather and/or forecast, corresponding points of interest along such route, etc.). The user may then select the information that the user desires to access, which will then be presented to the user.

For example, a user may select a graphical indication associated with a particular route (*e.g.*, a previous journey). In response, at least in part, to such selection, step 440 may comprise notifying the user that textual notes, audio notes, still images, moving images and a networked traffic camera associated with the particular selected route are available. Step 440 may also comprise notifying the user that current public transportation information (*e.g.*, schedules, cost, times, etc.) associated with the journey is available via communication network. Step 440 may then, for example, comprise retrieving and/or providing such information to the user upon selection of particular information by the user. For example, continuing the exemplary scenario, step 440 may comprise communicating with a web server via the Internet to download a current bus and train schedule upon request by the user and/or upon generation of the personalized map. Also for example, step 440 may comprise presenting a slide show presentation of photographs associated with the selected route. Further for example, step 440 may comprise presenting textual notes to the user upon request by the user, where such textual notes might have been entered by the user (or other users) during a previous traversal of such route (or a portion thereof).

Also for example, step 440 may comprise providing a user interface mechanism by which a user may add additional information to be associated with a selected route of interest and/or edit or delete information already associated with a selected route of interest. For example, continuing the exemplary scenario from above, step 440 may comprise providing the user with a user interface by which a user may associate a new photograph with the selected route of interest (*e.g.*, associating such photograph with the selected route and/or a particular geographical location along such route). Also for example, step 440 may comprise providing the user with a user interface by which the user may edit notes previously associated with the route of interest. For example, a user may change a rating score (*e.g.*, the advisability of re-traversing such route in the future), a user may add new information concerning a new route of interest and/or a point of interest encountered along a route of interest, a user may add a note about travel options for traversing the route of interest, etc.

Additionally for example step 440 may comprise providing a user interface by which a user may select a person of interest (*e.g.*, a member of a specified group of people). For example, step 440 may comprise interacting with a user utilizing a touch screen that enables a user to touch a graphical indication associated with a person of interest, or may comprise utilizing a mouse or other cursor control device to perform such user interaction.

Upon selection of a person of interest by a user, step 440 may comprise presenting the user with any of a variety of types of information that have been associated with the person of interest. Many non-limiting examples of such information were provided previously. For example, step 440 may present the user with a list of available information (*e.g.*, a menu structure) that has been associated with the person of interest (*e.g.*, photographs, voice notes, review, schedule, route traveled, availability, text memos, preferred points of interest, etc.). The user may then select the information that the user desires to access, which will then be presented to the user.

For example, a user may select a graphical indication associated with a particular person of interest. In response, at least in part, to such selection, step 440 may comprise notifying the user that textual notes, audio notes, still images and moving images associated with the person of interest are available. Step 440 may also comprise notifying the user that current information about the person of interest is available via communication network (*e.g.*, from a social networked site). Step 440 may then, for example, comprise retrieving and/or providing such information to the user upon selection of particular information by the user. For example, continuing the exemplary scenario, step 440 may comprise communicating with a web server via the Internet to download a current social networking page upon request by the user and/or upon generation of the personalized map. Also for example, step 440 may comprise presenting a slide show presentation of photographs associated with the selected person. Further for example, step 440 may comprise presenting textual notes to the user upon request by the user, where such textual notes might have been entered by the user (or other users) during a previous encounter with such person of interest. Such textual notes may also, for example, comprise information communicated with (*e.g.*, to and/or from) the selected person of interest.

Also for example, step 440 may comprise providing a user interface mechanism by which a user may add additional information to be associated with a selected person of interest and/or edit or delete information already associated with a selected person of interest. For example, continuing the exemplary scenario from above, step 440 may comprise providing the user with a user interface by which a user may associate a new photograph with the selected person of interest (*e.g.*, associating such photograph with the selected person and/or group of people). Also for example, step 440 may comprise providing the user with a user interface by which the user may edit notes previously associated with the person of interest. For example, a user may add new information concerning a new person of interest and/or concerning a previously encountered person of interest, etc.

As mentioned above, step 440 may comprise providing a user interface through which a user may create a new point of interest for the personalized map. For example, a user may visit a particular restaurant and desire to add information concerning such restaurant to the present and/or future personalized map. Step 440 may perform such functionality in any of a variety of manners. As a non-limiting example, step 440 may comprise instantiating a new object of a particular type, associating a geographical location and name of the new point of interest, and providing a user interface by which the user may enter and/or request additional information concerning such point of interest.

In general, step 440 may comprise interacting with a user regarding a presented personalized map (*e.g.*, as presented at step 430). Accordingly, the scope of various aspects of the present invention should not be limited by characteristics of any particular manner of performing such interaction unless explicitly claimed.

The exemplary method 400 may, at step 495, comprise performing continued processing. Such continued processing may comprise performing any of a variety of different functions. For example and without limitation, step 495 may comprise directing method flow to any of the previously discussed steps (*e.g.*, steps illustrated in Figures 3-4).

Also for example, step 495 may comprise updating (*e.g.*, in response to user request and/or automatically without direct user interaction) information associated with points of interest. Such updating may, for example, be performed in response to detected user position. For example, when a system implementing the method 400 detects that a user has arrived at a particular city or is in route to such city (*e.g.*, detected using movement information, a transportation itinerary, received flight information, etc.), information updating may be initiated to obtain current information for points of interest in such city.

Such updating may, for example, be performed periodically in a querying manner. For example, step 495 may comprise periodically querying servers associated with points of interest for updated information. Such querying may, for example, be performed periodically or may be performed in response to a user request for personalized map generation. Such updating may, for example, be performed in a passive receiving manner. For example, step 495 may comprise receiving information update communications originated by servers associated with points of interest when such servers are provided with updated information to distribute. Updated information may then be associated with various points of interest, routes of interest and/or people of interest for access to such information when selected by a user (*e.g.*, at step 440). The following discussion will present various non-limiting exemplary illustrations of such updating.

For example, a favorite meal or manager that was present at a particular restaurant a few years also may no longer be present. Also for example, a particular restaurant or nightclub might have moved, changed names, changed hours of operation, changed ownership/management, changed theme, etc. Additionally for example, the popularity of a particular hotspot might have changed. Further for example, community characteristics might have changed (*e.g.*, a formerly safe neighborhood may have become unsafe over time). All of such exemplary information may be updated so that when a personalized map is formed and presented to a user, the user may utilize the personalized map (*e.g.*, at step 440) to access current information of interest.

In another example, such updating may comprise updating transportation information. Such updating may, for example, comprise updating transportation station location information, transportation scheduling and/or pricing information, etc. Such updating may, for example, comprise updating construction information that may affect the ability of a user to traverse a previously traversed route. For example, a route traversed in the past might not (at least temporarily) be available or might be slow or hazardous. Such current route availability and/or current route obstacles may, for example, be indicated on previously traversed routes selected by the user to be present the personalized map.

In yet another example, hours of operation, entertainment schedule, seating layout, reservation method and/or pricing associated with a tourist destination point of interest may have changed. Such updating may, for example, comprise establishing a communication link with a server associated with such tourist destination point of interest, obtaining current information associated with such point of interest, and associating such current information with the point of interest in a manner making such information accessible to a user of a personalized map that includes such point of interest.

The above-mentioned updating may comprise updating information associated with a point of interest, route of interest and/or person of interest in a database. Such database may, for example, be stored locally at a personal portable electronic device, at a home computing station and/or at a networked server accessible through a communication network (*e.g.*, the Internet).

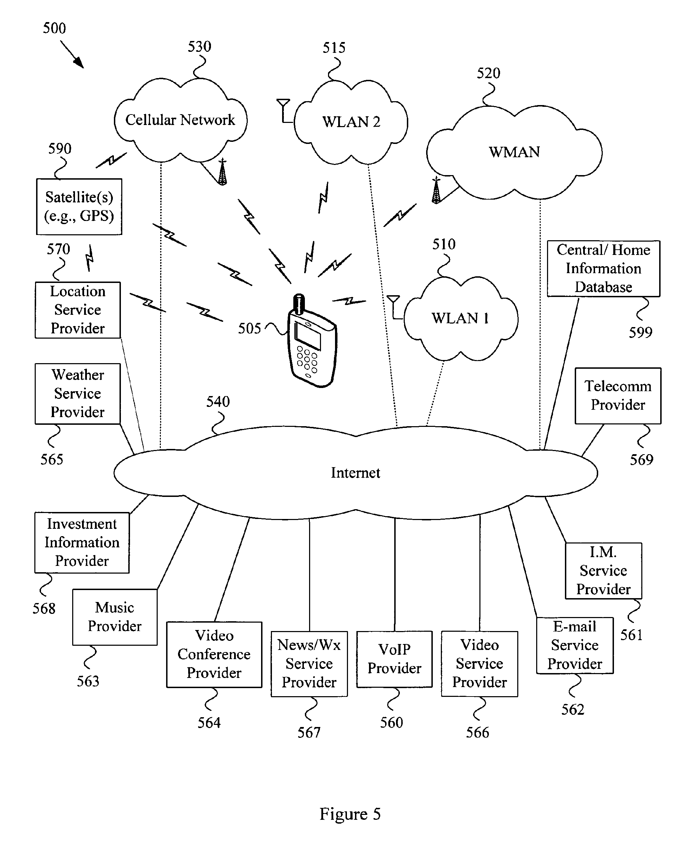

The previous discussion of Figures 1-4 presented various functional aspects of the present invention by way of many non-limiting examples. Figures 5-7 are presented below to provide various non-limiting examples of hardware and/or software implementations of such various functional aspects.

Figure 5 is a diagram illustrating an exemplary personal mapping system environment 500. The exemplary environment 500 includes a variety of systems and/or subsystems related to the previously discussed functionality.

For example, any or all of the various aspects discussed previously may be performed in a personal portable electronic device such is illustrated at item 505. As discussed previously, such a personal portable electronic device 505 may comprise characteristics of any of a variety of personal devices. For example, the portable device 505 may comprise characteristics of a portable telephone (*e.g.*, a cellular telephone, VoIP telephone, etc.), personal digital assistant, handheld computer, media presenting device, positioning system, gaming system, etc.

Also as discussed previously, various aspects may utilize positioning information. Such positioning information may, for example and without limitation, be obtained via a satellite position system 590 (*e.g.*, based on GPS, A-GPS, etc.) and/or other location service provider 570. Note that such positioning information may be obtained via a terrestrial-based triangulation system, premises UWB system, etc.

Additionally as discussed previously, various aspects may utilize an information database, which as illustrated in Figure 5 at item 599 may be a central networked database (which may be personal or shared), a home premises database, etc. For example, any or all of the personalized mapping information discussed previously may be stored at one or more of such databases 599 and/or may be stored locally in a portable device 505.

Further as discussed previously, any of a large variety of types of information may be associated with personalized map points of interest, routes of interest and/or people of interest. Such information may be obtained from any of a variety of locations. For example, as shown in Figure 5, weather information (*e.g.*, to be associated with a route and/or point of interest) may be obtained from a weather service provider 565, and investment information (*e.g.*, to be associated with an enterprise point of interest) may be obtained from an investment information provider 568. Also for example, music information to be associated with points, routes and/or people of interest on a personalized map may be obtained from a music provider 563, video information (*e.g.*, to be associated with a person, place or route of interest) may be obtained from a video conference provider 564 and/or video service provider 566.

Additionally for example, current and/or recent news information (*e.g.*, to be associated with a person, place or route of interest) may be obtained from a news service provider 567. Further for example, any of a variety of types of information (*e.g.*, textual, video, audio, graphical, etc.) may be obtained through various communication services. Such communication services may, for example, be provided by a video conferencing provider 564, a VoIP provider 560, a video service provider 566, an e-mail service provider 562, an instant messaging service provider 561, a telecommunication provider 569, etc.

Further, as discussed previously, any or all of the types of information discussed previously may be communicated between various networked entities through any of a large variety of types of communication networks. The exemplary environment 500 provides various non-limiting examples, including a cellular communication network 530, first wireless LAN 510, second wireless LAN 515, wireless metropolitan area network 520, the Internet 540, etc.

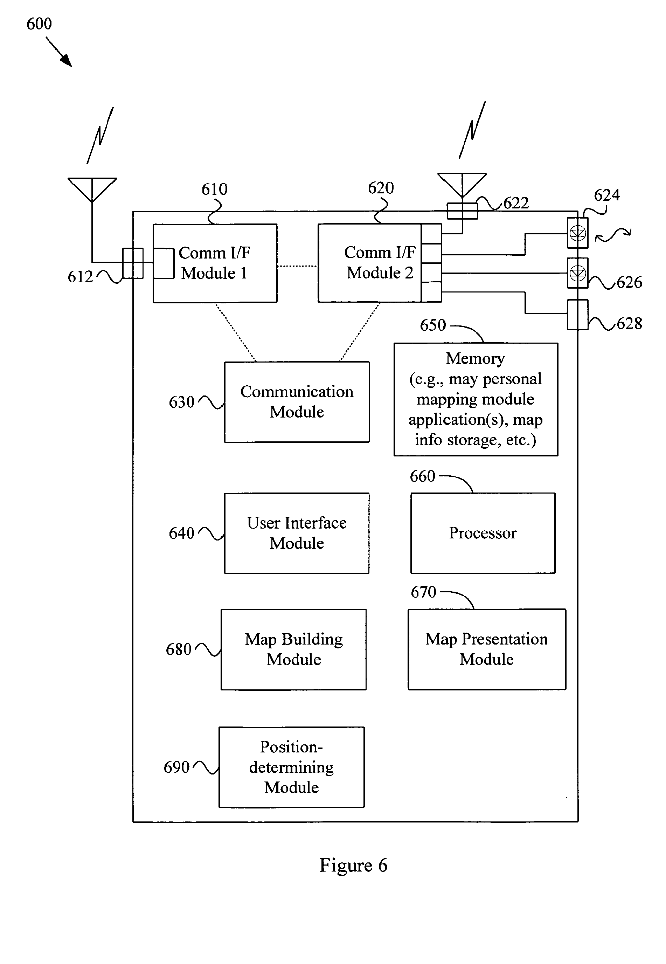

Figure 6 is a diagram illustrating a non-limiting exemplary block diagram of a mobile device and/or information server 600, in accordance with various aspects of the present invention. The following discussion will generally refer to the block diagram as a system 600. It should be noted that the system 600 may be entirely located in a personal portable electronic device, entirely located in a desktop computing system, entirely located in a laptop/notebook computing system, entirely located in an e-book reading system, etc. Alternatively, the various components of the system 600 may be distributed between a plurality of systems (*e.g.*, substantially independent systems, geographically distinct systems, separately managed/control systems, etc.).

The exemplary system 600 may, for example, operate to perform any or all functional aspects discussed previously with regard to Figures 1-4. Also for example, the exemplary system 600 may share any or all characteristics with the exemplary personal portable electronic device 505 and/or other system entities shown in Figure 5.

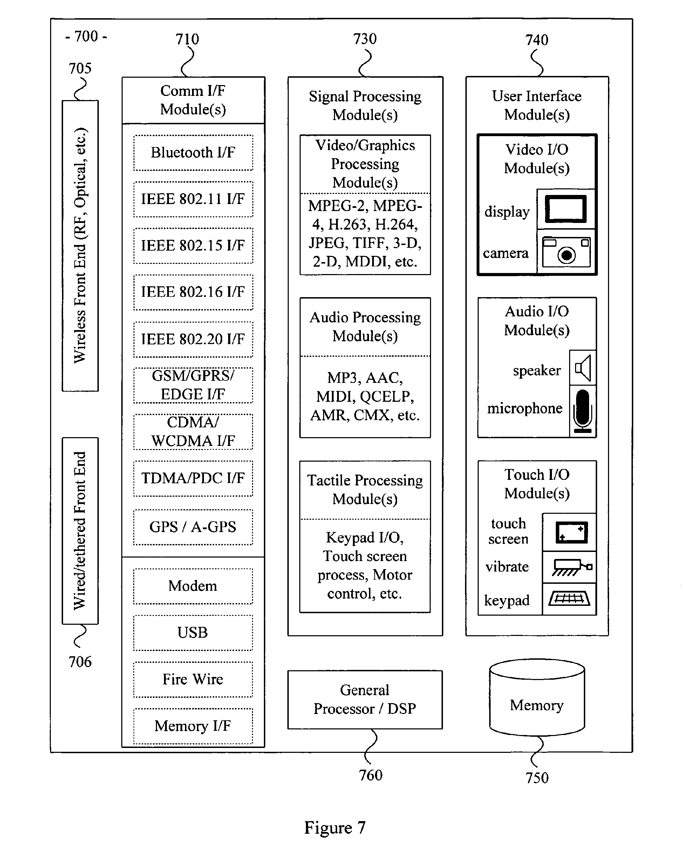

The exemplary system 600 comprises a first communication interface module 610 that operates to communicate wirelessly through a first wireless port 612. Such communication interface module 610 may, for example, operate to perform any or all of the communication functionality discussed herein. The exemplary system 600 also comprises a second communication interface module 620 that operates to communicate through a variety of communication ports, including a second wireless port 622, a non-tethered optical (*e.g.*, IR) port 624, a tethered optical port 626 and/or a hardwire connection port 628. Such communication interface modules 610, 620 may, for example, operate to independently communicate through different respective communication networks utilizing different respective communication protocols, various non-limiting examples of which are illustrated in Figure 7.

The exemplary system 600 may, for example, comprise a communication module 630 that operates to manage utilization of the first 610 and second 620 communication interface modules to perform any or all of the communication functionality discussed herein. The exemplary system 600 may also, for example, comprise a user interface module 640 that operates to perform any or all of the user interface functionality discussed herein.

The exemplary system 600 may, for example, comprise a map building module 680 that operates to perform any or all of the map forming and/or generation functionality discussed herein (*e.g.*, with regard to Figures 1-4). Also for example, the exemplary system 600 may comprise a position-determining module 690 that operates to perform any or all of the position determining functionality discussed herein. Additionally for example, the exemplary system 600 may comprise a map presentation module 670 that operates to perform any or all of the personalized map presentation functionality discussed herein.

The exemplary system 600 may, for example, comprise a memory 650 (*e.g.*, one or more memory devices). For example, such a memory 650 may be utilized to perform any or all of the information storage (*e.g.*, database) activities discussed previously. For example, the memory 650 may be utilized to store map characteristics profiles, information of generated maps, information associated with points, routes and/or people of a personalized map, etc. Additionally for example, the memory 650 may operate to store operating instructions that, when executed by a processor, operate to perform any or all of the functionality discussed previously.

The exemplary system 600 may, for example, comprise a processor 660. Such a processor 660 may, for example, comprise one or more general purpose microprocessors, digital signal processors, application-specific integrated circuits that perform processing functionality, etc. The processor 660 may, for example, operate to execute software and/or firmware instructions that when executed implement any or all of the functionality discussed herein. For example, even though the exemplary system 600 shows distinct functional modules, such functional modules may be implemented in a common processor or plurality of processors.

Figure 7 is a diagram illustrating a non-limiting exemplary block diagram of a system 700 in accordance with various aspects of the present invention. The exemplary system 700 may share any or all aspects with the systems illustrated in Figures 5-6 and discussed previously. For example, the exemplary system 700 (or various modules thereof) may operate to perform any or all functionality discussed herein. As with the exemplary system 600, the components of the exemplary system 700 may be in a single device (*e.g.*, a personal portable electronic device, home computer, laptop/notebook computer, e-book reader, set top box, etc.), but may also be distributed between a plurality of communicatively coupled devices.

For example, the system 700 comprises a processor 760. Such a processor 760 may, for example, share any or all characteristics with the processor 660 discussed with regard to Figure 6. Also for example, the system 700 comprises a memory 750. Such memory 750 may, for example, share any or all characteristics with the memory 650 discussed with regard to Figure 6.

Also for example, the system 700 may comprise any of a variety of User Interface Module(s) 740. Such User Interface Module(s) 740 may, for example, share any or all characteristics with the user interface module(s) 640 discussed previously with regard to Figure 6. For example and without limitation, the User Interface Module(s) 740 may comprise: a display device, a camera (for still or moving picture acquisition), a speaker, an earphone (*e.g.*, wired or wireless), a microphone, a video screen (*e.g.*, a touch screen), a vibrating mechanism, a keypad, and/or any of a variety of other user interface devices (*e.g.*, a mouse, a trackball, a touch pad, touch screen, light pen, game controlling device, etc.).

The exemplary mobile computing device 700 may also, for example, comprise any of a variety of communication modules (705, 706, and 710). Such communication module(s) may, for example, share any or all characteristics with the Communication Interface Module(s) 610, 620 discussed previously with regard to Figure 6. For example and without limitation, the Communication Interface Module(s) 710 may comprise: a Bluetooth interface module; an IEEE 802.11, 802.15, 802.16 and/or 802.20 module; any of a variety of cellular telecommunication interface modules (*e.g.*, GSM/GPRS/EDGE, CDMA/CDMA2000/1x-EV-DO, WCDMA/HSDPA/HSUPA, TDMA/PDC, WiMAX, etc.); any of a variety of position-related communication interface modules (*e.g.*, GPS, A-GPS, etc.); any of a variety of wired/tethered communication interface modules (*e.g.*, USB, Fire Wire, RS-232, wireline and/or cable modem, etc.); any of a variety of communication interface modules related to communicating with external memory devices; etc. The exemplary system 700 is also illustrated as comprising various wired 706 and/or wireless 705 front-end modules that may, for example, be included in the communication interface modules and/or utilized thereby.

The exemplary system 700 may also comprise any of a variety of Signal Processing Module(s) 730. Such Signal Processing Module(s) 730 may, for example, be utilized to assist in processing various types of information discussed previously (*e.g.*, with regard to video processing, image processing, audio processing, general user interface information data processing, etc.). For example and without limitation, the Signal Processing Module(s) 730 may comprise: Video/graphics Processing Modules (*e.g.* MPEG-2, MPEG-4, H.263, H.264, JPEG, TIFF, 3-D, 2-D, MDDI, etc.); Audio Processing Modules (*e.g.*, MP3, AAC, MIDI, QCELP, AMR, CMX, etc.); and/or Tactile Processing Modules (*e.g.*, Keypad I/O, touch screen processing, motor control, etc.).

In summary, various aspects of the present invention provide a system and method for providing a personal mapping system. While the invention has been described with reference to certain aspects and embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

## Claims

1. A method for generating a personalized map, the method comprising:
receiving location information for a point of interest;
receiving user-input information from a user;
associating the received user-input information with the point of interest; and
generating a personalized map comprising a graphical indication at the location of the point of interest, where selection of the graphical indication by a user provides user access to the received user-input information associated with the point of interest.

2. The method of claim 1, wherein the location information comprises geographical coordinate information.

3. The method of claim 2, wherein receiving location information for a point of interest comprises automatically, without direct interaction with the user, tracking geographical coordinates of the user.

4. The method of claim 1, wherein the location information comprises street address information.

5. The method of claim 1, wherein the location information comprises a name of the point of interest.

6. The method of claim 1, wherein the user-input information comprises photograph information to be associated with the point of interest.

7. The method of claim 1, wherein the user-input information comprises audio information to be associated with the point of interest.

8. The method of claim 1, wherein the user-input information comprises communication network address information to be associated with the point of interest.

9. The method of claim 1, wherein the user-input information comprises information of a category to be associated with the point of interest.

10. The method of claim 9, wherein generating a personalized map comprises determining one or more categories of points of interest to be shown on the personalized map.

11. The method of claim 1, wherein generating a personalized map comprises:
determining a plurality of users; and
populating the personalized map with respective location information and respective user-input information associated with each of the plurality of users.

12. A system for generating a personalized map, the system comprising:
at least one module operable to, at least:
receive location information for a point of interest;
receive user-input information from a user;
associate the received user-input information with the point of interest;
and
generate a personalized map comprising a graphical indication at the location of the point of interest, where selection of the graphical indication by a user provides user access to the received user-input information associated with the geographical location.

13. The system of claim 12, where the location information comprises geographical coordinate information.

14. The system of claim 13, where the at least one module is operable to receive location information for a point of interest by, at least in part, operating to automatically, without direct interaction with the user, track geographical coordinates of the user.

15. The system of claim 12, where the location information comprises street address information.
